# EUROPEAN PATENT APPLICATION

(11) **EP 4 729 914 A2**
(43) Date of publication of application: **22.04.2026**
(21) Application number: 26153175.0
(22) Date of filing: 29.09.2023
(51) Int. Cl.: G01M 13/028

(54) **VIBRATION MONITORING DEVICE, SUPERCHARGER, AND VIBRATION MONITORING METHOD**

(30) Priority: 14.10.2022 JP 2022165172
(62) Divisional of application: 23877164.6
(71) Applicant: Mitsubishi Heavy Industries Marine Machinery & Equipment Co., Ltd., Nagasaki-shi Nagasaki 850-8610 (JP)
(72) Inventor: YOSHIDA, Tadashi, Tokyo, 100-8332 (JP); TANAKA, Akifumi, Nagasaki-shi, Nagasaki, 850-8610 (JP); NISHIMURA, Hidetaka, Tokyo, 100-8332 (JP); OGAWA, Shinji, Tokyo, 100-8332 (JP); SASAKI, Ryoji, Tokyo, 100-8332 (JP)
(74) Representative: Hoffmann Eitle

(57) **Abstract**

This vibration monitoring device comprises: a rotation sensor that outputs a rotation signal synchronized with a rotation of a rotating shaft; a filter command value output device that outputs a division filter command value obtained by dividing a filter command value corresponding to a rotation speed of the rotating shaft calculated from the rotation signal by n (where n = 1, 2, ... are natural numbers); and a nonlinear forced vibration bandpass filter that receives input of the rotation signal and the division filter command value to extract a signal in a passband including a nonlinear center frequency set according to the division filter command value from the rotation signal as a forced vibration signal from which information on forced vibration of the rotating shaft is acquirable.

## Description

### Technical Field

The present disclosure relates to a vibration monitoring device, a supercharger, and a vibration monitoring method.

The present application claims priority based on Japanese Patent Application No. 2022-165172 filed in Japan on October 14, 2022, the contents of which are incorporated herein by reference.

### Background Art

For example, PTL 1 discloses a technique in which the signal in the passband suitable for evaluating the vibration of the rotating shaft is extracted from the rotation signal synchronized with the rotation of the rotating shaft by setting the passband of the filter according to the rotation speed of the rotating shaft.

### Citation List

### Patent Literature

[PTL 1] Japanese Unexamined Patent Application Publication No. 2022-135868

### Summary of Invention

### Technical Problem

In the technique described in PTL 1, it is possible to evaluate forced vibration generated by the rotating shaft itself having an unbalanced configuration or forced vibration generated by the rotating shaft coming into contact with a stationary member out of forced vibrations of the rotating shaft, from the rotation signal of the rotating shaft. Meanwhile, in the technique described in PTL 1, it is difficult to evaluate self-excited vibration of the rotating shaft (for example, oil whip generated by resonance between the rotating shaft and oil applied to the rotating shaft) from the rotation signal of the rotating shaft. In addition, it is difficult to evaluate nonlinear forced vibration (for example, vibration caused by backlash due to an assembly defect of a bearing portion that supports the rotating shaft) out of the forced vibrations of the rotating shaft from the rotation signal of the rotating shaft.

The present disclosure has been made in view of the above-described problems, and an object of the present disclosure is to provide a vibration monitoring device and a vibration monitoring method capable of evaluating self-excited vibration of a rotating shaft or nonlinear forced vibration of the rotating shaft from a rotation signal of the rotating shaft.

### Solution to Problem

In order to achieve the above object, a vibration monitoring device according to the present disclosure includes a rotation sensor that outputs a rotation signal synchronized with a rotation of a rotating shaft, an output device that outputs a natural-frequency-filter command value calculated from a natural frequency that the rotating shaft has, and a self-excited-vibration bandpass filter that receives input of the rotation signal and the natural-frequency-filter command value to extract a signal in a passband included in a pass range set according to the natural-frequency-filter command value from the rotation signal as a self-excited vibration signal from which information on self-excited vibration of the rotating shaft is acquirable.

In order to achieve the above object, a vibration monitoring device according to the present disclosure includes a rotation sensor that outputs a rotation signal synchronized with a rotation of a rotating shaft, a filter command value output device that outputs a division filter command value obtained by dividing a filter command value corresponding to a rotation speed of the rotating shaft calculated from the rotation signal by n (where n = 1, 2, ... are natural numbers), and a nonlinear forced vibration bandpass filter that receives input of the rotation signal and the division filter command value to extract a signal in a passband including a nonlinear center frequency set according to the division filter command value from the rotation signal as a forced vibration signal from which information on forced vibration of the rotating shaft is acquirable.

In order to achieve the above object, a vibration monitoring method according to the present disclosure includes a step of outputting a rotation signal synchronized with a rotation of a rotating shaft, a step of outputting a natural-frequency-filter command value calculated from a natural frequency that the rotating shaft has, and a step of receiving input of the rotation signal and the natural-frequency-filter command value to extract a signal in a passband included in a pass range set according to the natural-frequency-filter command value from the rotation signal as a self-excited vibration signal from which information on self-excited vibration of the rotating shaft is acquirable.

In order to achieve the above object, a vibration monitoring method according to the present disclosure includes a step of outputting a rotation signal synchronized with a rotation of a rotating shaft, a step of outputting a division filter command value obtained by dividing a filter command value corresponding to a rotation speed of the rotating shaft calculated from the rotation signal by n (where n = 1, 2, ... are natural numbers), and a step of receiving input of the rotation signal and the division filter command value to extract a signal in a passband including a nonlinear center frequency set according to the division filter command value from the rotation signal as a forced vibration signal from which information on forced vibration of the rotating shaft is acquirable.

### Advantageous Effects of Invention

According to the vibration monitoring device and the vibration monitoring method of the present disclosure, the self-excited vibration of the rotating shaft or the nonlinear forced vibration of the rotating shaft can be evaluated from the rotation signal of the rotating shaft.

### Brief Description of Drawings

Fig. 1 is a diagram schematically showing a configuration of a supercharger to which a vibration monitoring device according to a first embodiment is applied.
Fig. 2 is a diagram schematically showing a configuration of a marker portion according to the first embodiment.
Fig. 3 is a waveform diagram of a rotation signal output by a rotation sensor according to the first embodiment.
Fig. 4 is a schematic functional block diagram of an output device according to the first embodiment.
Fig. 5 is a waveform diagram of a rotation pulse signal obtained by frequency-dividing the rotation signal ofFig. 3.
Fig. 6 is a diagram showing a characteristic table of a low-pass filter according to the first embodiment.
Fig. 7 is a diagram showing amplitude-frequency characteristics of a bandpass filter.
Fig. 8 is a diagram showing an example of display content displayed on a display device according to the first embodiment.
Fig. 9 is a Campbell diagram of a rotating shaft according to the first embodiment.
Fig. 10 is a diagram schematically showing a configuration of a vibration monitoring device according to a second embodiment.
Fig. 11 is a schematic functional block diagram of an output device according to the second embodiment.
Fig. 12 is a diagram showing amplitude-frequency characteristics of a nonlinear forced vibration bandpass filter.
Fig. 13 is a diagram showing an example of display content displayed on a display device according to the second embodiment.
Fig. 14 is a diagram schematically showing a configuration of a vibration monitoring device according to a third embodiment.
Fig. 15 is a flowchart showing a vibration monitoring method according to an embodiment.
Fig. 16 is a flowchart showing a vibration monitoring method according to another embodiment.

### Description of Embodiments

Hereinafter, a vibration monitoring device, a supercharger, and a vibration monitoring method according to embodiments of the present disclosure will be described with reference to the drawings. Such embodiments show one aspect of the present disclosure, do not limit this disclosure, and can be optionally changed within the scope of the technical concept of the present disclosure.

### <First embodiment>

### (Configuration of supercharger)

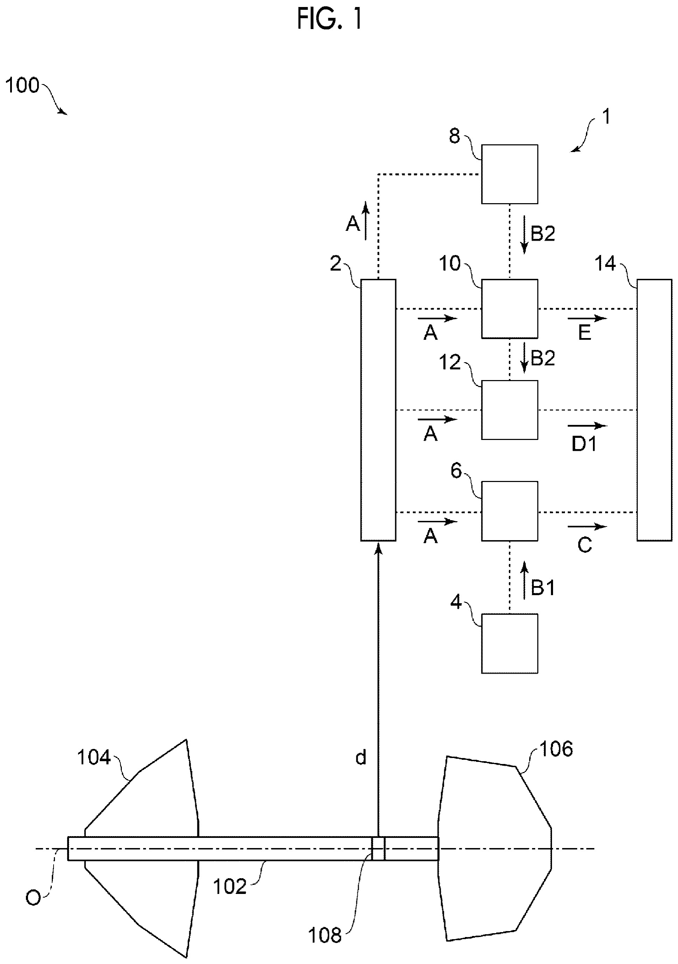

Fig. 1 is a diagram schematically showing a configuration of a supercharger 100 to which a vibration monitoring device 1 according to a first embodiment is applied. The supercharger 100 is not particularly limited, and is, for example, an exhaust supercharger that is mounted on a ship to boost intake air of an engine. In the present disclosure, the exhaust supercharger will be described as an example.

As shown in Fig. 1, the supercharger 100 includes a rotating shaft 102, a compressor 104, a turbine 106, and the vibration monitoring device 1 according to the first embodiment. The compressor 104 is provided at one end portion (left end portion in Fig. 1) of the rotating shaft 102 in an axis O direction. The turbine 106 is provided at the other end portion (right end portion in Fig. 1) of the rotating shaft 102 in the axis O direction. The rotating shaft 102 connects the compressor 104 and the turbine 106.

The compressor 104 compresses the intake air and supplies the compressed intake air to the engine (not illustrated). When exhaust gas discharged from the engine passes through the turbine 106, the turbine 106 converts the energy of the exhaust gas into rotational energy of the turbine 106. The rotating shaft 102 rotates about an axis O along with the rotation of the turbine 106. The compressor 104 is driven by the rotation of the rotating shaft 102.

In the mode illustrated in Fig. 1, the rotating shaft 102 includes a marker portion 108 which is configured such that a rotation signal A to be described later has a pulse waveform. The marker portion 108 is provided between the compressor 104 and the turbine 106 in the axis O direction. The marker portion 108 is provided on a turbine 106 side between the compressor 104 and the turbine 106 in the axis O direction. In some embodiments, the marker portion 108 is provided on one end side of the rotating shaft 102 with respect to the compressor 104 in the axis O direction.

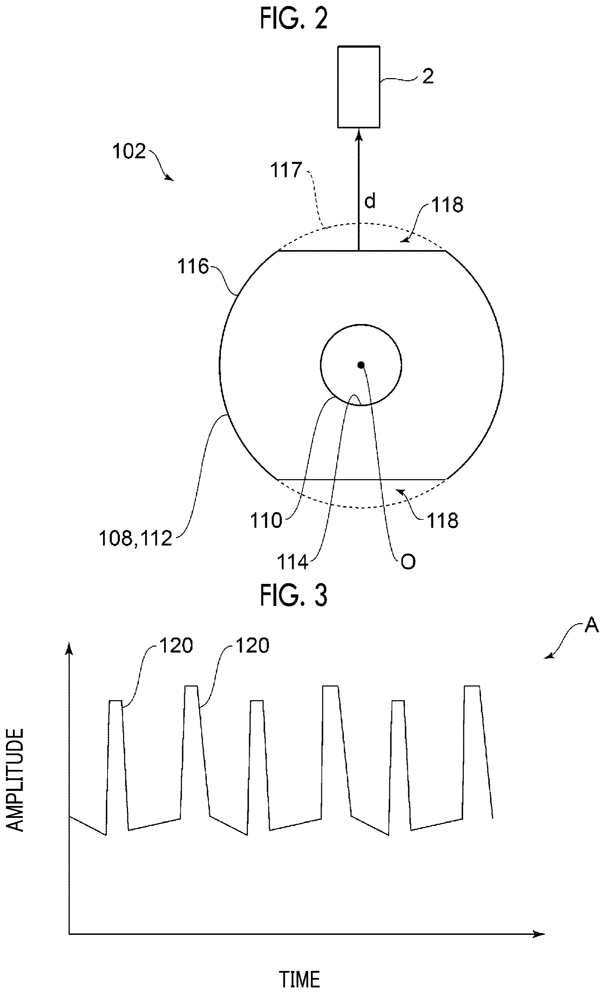

A configuration example of the marker portion 108 will be described. Fig. 2 is a diagram schematically showing a configuration of the marker portion 108 according to the first embodiment. In the mode illustrated in Fig. 2, the rotating shaft 102 includes an inner rotating body 110 and an outer rotating body 112. The inner rotating body 110 of the rotating shaft 102 rotates about the axis O along with the rotation of the turbine 106. A hole 114 into which the inner rotating body 110 is fitted is formed in the outer rotating body 112. In other words, the outer rotating body 112 is attached to the inner rotating body 110 to cover an outer peripheral surface of the inner rotating body 110. The outer rotating body 112 rotates as the inner rotating body 110 fitted into the hole 114 rotates. The outer rotating body 112 includes a groove 118 formed on an outer peripheral surface 116. When the groove 118 is not formed, the outer peripheral surface 116 of the outer rotating body 112 has a circular shape. The groove 118 is formed by cutting out a part 117 of the outer peripheral surface 116 having a circular shape toward the axis O. In the mode illustrated in Fig. 2, the outer rotating body 112 includes two grooves 118, and the outer peripheral surface 116 has an oval shape. One groove 118 is located on a side opposite to the other groove 118 with the axis O interposed therebetween. Two grooves 118 are formed on the outer rotating body 112 to be left-right symmetrical about the axis O. The outer rotating body 112 corresponds to the marker portion 108.

The marker portion 108 is not limited to the mode illustrated in Fig. 2 as long as the rotation signal A is configured to have a pulse waveform. For example, the marker portion 108 (outer rotating body 112) may include a protrusion portion that protrudes toward a radially outer side from the part 117 of the outer peripheral surface 116, instead of the groove 118.

### (Configuration of vibration monitoring device according to first embodiment)

As shown in Fig. 1, the vibration monitoring device 1 includes a rotation sensor 2, an output device 4, and a self-excited-vibration bandpass filter 6. The self-excited-vibration bandpass filter 6 is electrically connected to the rotation sensor 2, and can acquire the output value (rotation signal A) of the rotation sensor 2. The self-excited-vibration bandpass filter 6 is electrically connected to the output device 4, and can acquire an output value (natural-frequency-filter command value B1) of the output device 4.

The rotation sensor 2 outputs the rotation signal A synchronized with the rotation of the rotating shaft 102. The rotation sensor 2 is an eddy current displacement sensor that detects a distance d to the outer peripheral surface 116 of the rotating shaft 102 by generating an eddy current on the outer peripheral surface 116 of the rotating shaft 102. More specifically, the rotation sensor 2 is made of a coil that generates a high-frequency magnetic flux, and detects a change in the eddy current generated on the outer peripheral surface 116 of the rotating shaft 102, which is a target (measurement object), due to the high-frequency magnetic flux generated from the coil as a change in the impedance of the coil. Namely, since the rotation sensor 2 detects a change in the distance d caused by the rotation of the rotating shaft 102 as a change in the impedance of the coil, the rotation sensor 2 is configured to obtain a maximum output when the outer peripheral surface 116 of the rotating shaft 102 becomes closest to the rotation sensor 2.

The rotation sensor 2 is not limited to the eddy current displacement sensor. In some embodiments, the rotation sensor 2 is a laser displacement sensor that includes a laser head which performs irradiation with laser light, and that irradiates the outer peripheral surface 116 of the rotating shaft 102 with the laser light to detect a distance from the laser head to the outer peripheral surface 116 of the rotating shaft 102 using reflected light of the laser light.

Fig. 3 is a waveform diagram of the rotation signal A output by the rotation sensor 2 according to the first embodiment. As shown in Fig. 3, the rotation signal A has a pulse waveform formed along with the rotation of the rotating shaft 102 since the marker portion 108 (outer rotating body 112) of the rotating shaft 102 described above includes the groove 118. Namely, during the rotation of the rotating shaft 102, when the rotation sensor 2 and the groove 118 face each other, the displacement therebetween changes greatly. On the other hand, during the rotation of the rotating shaft 102, when the rotation sensor 2 and the groove 118 do not face each other, the change in displacement is small. In the first embodiment, since the marker portion 108 includes two grooves 118, two pulses (a portion 120 at which the displacement of the waveform changes greatly) appear during one rotation of the rotating shaft 102.

The output device 4 outputs the natural-frequency-filter command value B1 calculated from a natural frequency Fa that the rotating shaft 102 has. A method for measuring the natural frequency Fa of the rotating shaft 102 is not particularly limited, and for example, the critical speed (natural frequency Fa) of the rotating shaft 102 may be evaluated by performing bending vibration analysis of the shafting using rotor dynamics analysis (ROT-CAE), or the natural frequency Fa (resonance frequency) may be measured by mechanically applying forced vibration to the rotating shaft 102. The output device 4 converts the natural frequency Fa of the rotating shaft 102 by a conversion method set in advance to calculate the natural-frequency-filter command value B1. The natural-frequency-filter command value B1 is a voltage value or a current value.

The self-excited-vibration bandpass filter 6 receives input of the rotation signal A and the natural-frequency-filter command value B1 to output (extract) a self-excited vibration signal C. The self-excited vibration signal C is a signal from which the information on the self-excited vibration of the rotating shaft 102 can be acquired. The information on the self-excited vibration is, for example, a self-excited vibration frequency, a magnitude of the self-excited vibration, or a speed of the self-excited vibration. The self-excited-vibration bandpass filter 6 is configured such that a first pass range R1 is set according to the natural-frequency-filter command value B1. In the first embodiment, the first pass range R1 is 0.9 times the natural frequency Fa of the rotating shaft 102 or more and 1.1 times the natural frequency or less. For example, the natural frequency Fa of the rotating shaft 102 is 25 Hz, and the first pass range R1 is 22.5 Hz or more and 27.5 Hz or less.

The self-excited-vibration bandpass filter 6 passes, out of the rotation signal A output by the rotation sensor 2, a signal in a passband included in the first pass range R1, and cuts off a signal in a non-passband not included in the first pass range R1. The self-excited-vibration bandpass filter 6 extracts the rotation signal A included in the first pass range R1 from the rotation signal A as the self-excited vibration signal C.

In the first embodiment, as illustrated in Fig. 1, the vibration monitoring device 1 further includes a filter command value output device 8, a low-pass filter 10, a bandpass filter 12, and a display device 14. Each of the filter command value output device 8, the low-pass filter 10, and the bandpass filter 12 is electrically connected to the rotation sensor 2, and can acquire the output value (rotation signal A) of the rotation sensor 2. The low-pass filter 10 is electrically connected to the filter command value output device 8, and can acquire an output value (filter command value B2) of the filter command value output device 8. The bandpass filter 12 is electrically connected to the filter command value output device 8 via the low-pass filter 10, and can acquire the output value (filter command value B2) of the filter command value output device 8. In some embodiments, the bandpass filter 12 may acquire the filter command value B2 from the filter command value output device 8 without passing through the low-pass filter 10.

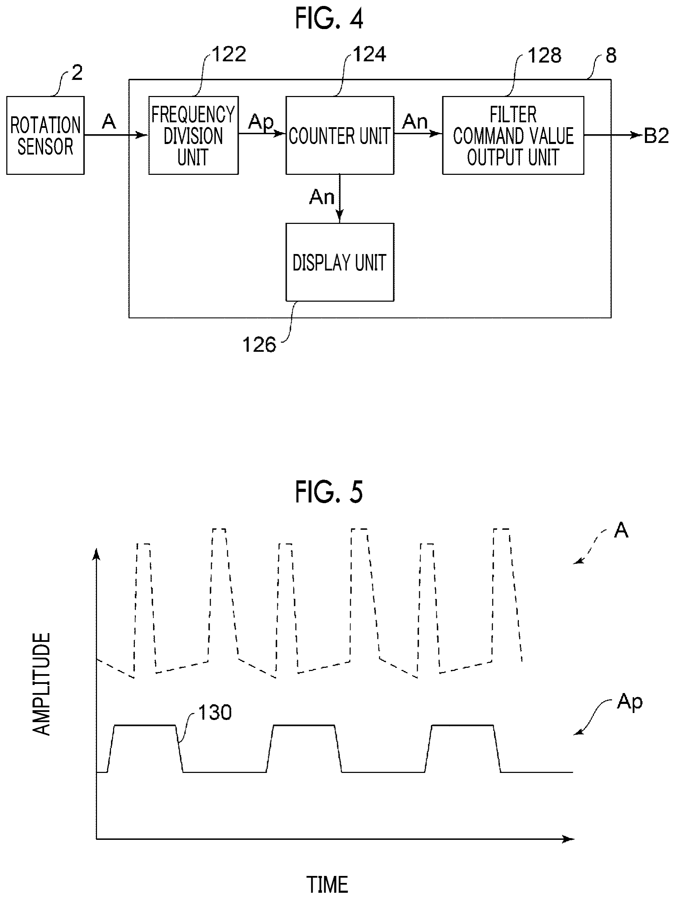

The filter command value output device 8 outputs the filter command value B2 corresponding to a rotation speed An of the rotating shaft 102 calculated from the rotation signal A. The filter command value output device 8 is a computer such as an electronic control device, and includes a processor such as a CPU or a GPU (not shown), a memory such as a ROM or a RAM, an I/O interface, and the like. The filter command value output device 8 realizes each functional unit included in the filter command value output device 8 by operating (calculating or the like) the processor according to a command of a program loaded into the memory. Each functional unit of the filter command value output device 8 according to the first embodiment will be described with reference to Fig. 4.

Fig. 4 is a schematic functional block diagram of the filter command value output device 8 according to the first embodiment. As shown in Fig. 4, the filter command value output device 8 includes a frequency division unit 122, a counter unit 124, a display unit 126, and a filter command value output unit 128.

Fig. 5 is a waveform diagram of a rotation pulse signal Ap obtained by frequency-dividing the rotation signal A of Fig. 3. As shown in Fig. 5, the frequency division unit 122 frequency-divides the rotation signal A output by the rotation sensor 2 to convert the rotation signal A into the rotation pulse signal Ap that includes one pulse (portion 130 in which the displacement of the waveform greatly changes) during one rotation of the rotating shaft 102.

The counter unit 124 counts the number of pulses included in the rotation pulse signal Ap per unit time, and calculates the rotation speed An of the rotating shaft 102. The display unit 126 displays the rotation speed An of the rotating shaft 102, which is calculated by the counter unit 124, on the display device 14. The display unit 126 may display the rotation speed An of the rotating shaft 102 on a device other than the display device 14.

The filter command value output unit 128 outputs the filter command value B2 corresponding to the rotation speed An of the rotating shaft 102 calculated by the counter unit 124. In the first embodiment, the filter command value B2 is a voltage value into which the rotation speed An of the rotating shaft 102 is converted by a conversion method set in advance. This conversion method is set based on characteristics of the low-pass filter 10 to be described later. In the first embodiment, when the rotation speed An of the rotating shaft 102 increases, the filter command value B2 (voltage value) also increases. In some embodiments, the rotation speed An of the rotating shaft 102 and the filter command value B2 are proportional to each other. In some embodiments, the filter command value B2 is a current value into which the rotation speed An of the rotating shaft 102 is converted by a conversion method set in advance.

As shown in Fig. 1, the low-pass filter 10 receives input of the rotation signal A and the filter command value B2 to output (extract) a vibration signal E. The vibration signal E is a signal from which the information on the vibration of the rotating shaft 102 can be acquired. The information on the vibration is, for example, the frequency of vibration, the magnitude of vibration, the speed of vibration, or the like.

The low-pass filter 10 is configured such that a cutoff frequency P is set according to the filter command value B2 (voltage value). The low-pass filter 10 passes the rotation signal A having a frequency smaller than the cutoff frequency P out of the rotation signal A output by the rotation sensor 2, and cuts off the rotation signal A having a frequency equal to or greater than the cutoff frequency P. The low-pass filter 10 extracts the rotation signal A having a frequency smaller than the cutoff frequency P from the rotation signal A, as the vibration signal E.

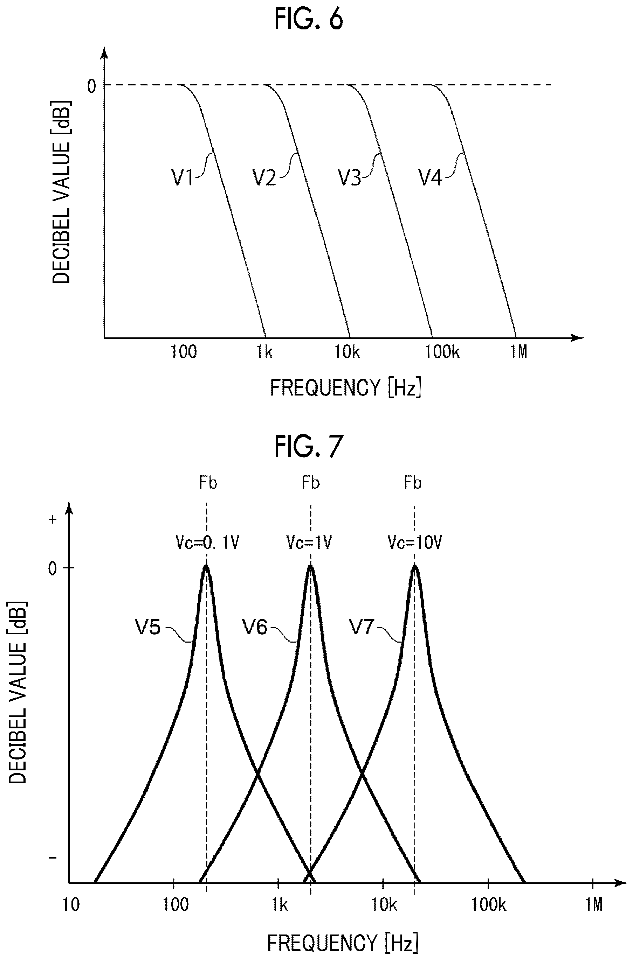

Here, the setting of the cutoff frequency P will be described. Fig. 6 is a diagram showing a characteristic table of the low-pass filter 10 according to the first embodiment. In Fig. 6, the horizontal axis represents the frequency expressed on a logarithmic scale, and the vertical axis represents the decibel value. In Fig. 6, the characteristic of the low-pass filter 10 when the voltage value (filter command value B2) is 0.01 V is indicated by V1, the characteristic of the low-pass filter 10 when the voltage value is 0.1 V is indicated by V2, the characteristic of the low-pass filter 10 when the voltage value is 1 V is indicated by V3, and the characteristic of the low-pass filter 10 when the voltage value is 10 V is indicated by V4.

The decibel value corresponds to the signal intensity, and when the decibel value is less than 0, the vibration signal E extracted by the low-pass filter 10 is attenuated. As shown in Fig. 6, at each voltage value (V1 to V4), as the frequency increases, the decibel value decreases, and the attenuation rate of the vibration signal E increases. More specifically, when the voltage value input to the low-pass filter 10 is 0.1 V (V2 in Fig. 6), the vibration signal E is extracted by cutting off the rotation signal A of 1 kHz or more out of the rotation signal A input to the low-pass filter 10. In the first embodiment, the low-pass filter 10 sets the cutoff frequency P such that the decibel value becomes 0. For example, when the voltage value is 0.1 V, the low-pass filter 10 sets the cutoff frequency to 1 kHz.

The vibration signal E extracted by the low-pass filter 10 is the rotation signal A of the rotating shaft 102, which has a frequency smaller than the cutoff frequency P, and the waveform of the vibration signal E is similar to that of the net actual vibration signal generated by the vibration of the rotating shaft 102.

As shown in Fig. 1, the bandpass filter 12 receives input of the rotation signal A and the filter command value B2 to output (extract) a forced vibration signal (hereinafter, referred to as a "first forced vibration signal D1"). The first forced vibration signal D1 is a signal from which the information on the forced vibration of the rotating shaft 102 can be acquired.

The bandpass filter 12 is configured such that a center frequency Fb is set according to the filter command value B2. The bandpass filter 12 passes, out of the rotation signal A output by the rotation sensor 2, a signal in a passband included in a second pass range R2 including the center frequency Fb, and cuts off a signal in a non-passband not included in the second pass range R2. The bandpass filter 12 extracts the rotation signal A included in the second pass range R2 from the rotation signal A as the first forced vibration signal D1.

Fig. 7 is a diagram showing amplitude-frequency characteristics of the bandpass filter 12. In Fig. 7, the horizontal axis represents the frequency expressed on a logarithmic scale, and the vertical axis represents the decibel value. In Fig. 7, the characteristic of the bandpass filter 12 when the voltage value (filter command value B2) is 0.1 V is indicated by V5, the characteristic of the bandpass filter 12 when the voltage value is 1 V is indicated by V6, and the characteristic of the bandpass filter 12 when the voltage value is 10 V is indicated by V7.

In Fig. 7, the decibel value corresponds to the signal intensity, and when the decibel value is less than 0, a second forced vibration signal D2 extracted by the bandpass filter 12 is attenuated. As shown in Fig. 7, at each voltage value (V5 to V7), the decibel value decreases as the distance between the frequency and the center frequency Fb of the passband of the bandpass filter 12 is increased, and the attenuation rate of the first forced vibration signal D1 increases. The center frequency Fb is set according to the filter command value B2 (value corresponding to the rotation speed An) output by the filter command value output device 8. Specifically, the center frequency Fb is set to coincide with or substantially coincide with the rotation speed An of the rotating shaft 102 counted by the counter unit 124 (refer to Fig. 4) of the filter command value output device 8. For example, the bandpass filter 12 may attenuate the first forced vibration signal D1 to satisfy a relationship 0.8C ≤ Fb ≤ 1.2C according to the filter command value B2. In addition, when the rotation speed An of the rotating shaft 102 and the filter command value B2 are proportional to each other, the center frequency Fb may be set such that the filter command value B2 and the center frequency Fb are proportional to each other. In addition, the upper limit and the lower limit of the passband of the bandpass filter 12 are set on both sides of the center frequency Fb according to the filter command value B2.

The first forced vibration signal D1 extracted by the bandpass filter 12 is a signal from which vibration (vibration having a frequency of vibration that is 1 time or approximately 1 time the rotation speed An) synchronized with the rotation of the rotating shaft 102 can be evaluated by the center frequency Fb of the bandpass filter 12 being set to be the same as or approximately the same as the rotation speed An of the rotating shaft 102.

The display device 14 simultaneously displays the information on the self-excited vibration of the rotating shaft 102 acquired from the self-excited vibration signal C, information on the total vibration (total vibration such as self-excited vibration or forced vibration is included) of the rotating shaft 102 acquired from the vibration signal E, and the information on the forced vibration of the rotating shaft 102 acquired from the first forced vibration signal D1. In the first embodiment, the display device 14 is electrically connected to each of the self-excited-vibration bandpass filter 6, the low-pass filter 10, and the bandpass filter 12, and can acquire each of the self-excited vibration signal C, the vibration signal E, and the first forced vibration signal D1.

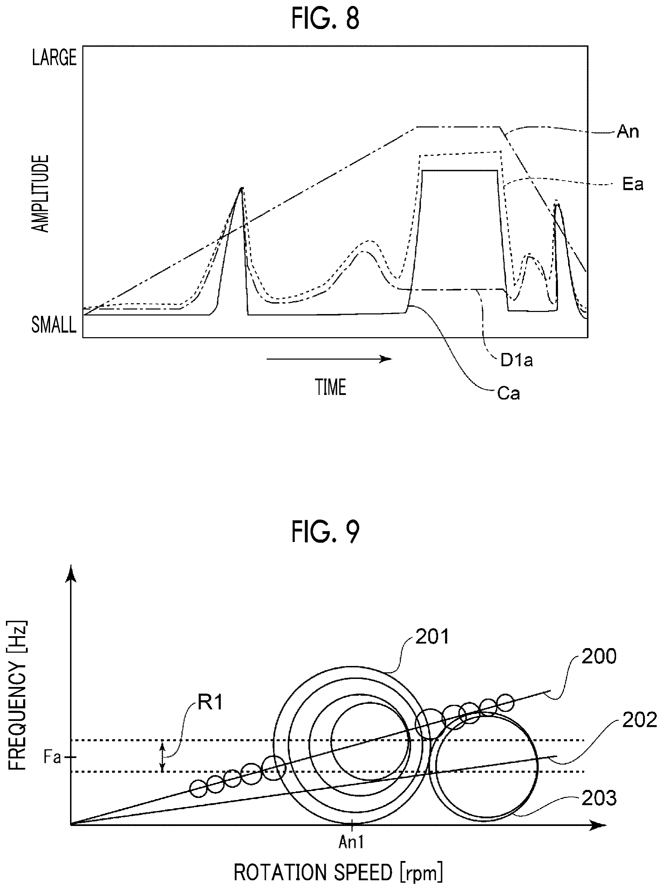

Fig. 8 is a diagram showing an example of display content displayed on the display device 14. In the example shown in Fig. 8, the display device 14 displays (solid line) amplitude Ca of the self-excited vibration signal C as the information on the self-excited vibration of the rotating shaft 102 acquired from the self-excited vibration signal C extracted by the self-excited-vibration bandpass filter 6. The display device 14 displays (dotted line) amplitude Ea (overall amplitude) of the vibration signal E as the information on the total vibration of the rotating shaft 102 acquired from the vibration signal E extracted by the low-pass filter 10. The display device 14 displays (one-dot chain line) amplitude D1a of the first forced vibration signal D1 (rotation 1 time amplitude: amplitude of vibration having a frequency of vibration of 1 time the rotation speed An) as the information on the forced vibration of the rotating shaft 102 acquired from the first forced vibration signal D1 extracted by the bandpass filter 12.

In the first embodiment, as illustrated in Fig. 8, the display device 14 further displays the rotation speed An of the rotating shaft 102. The display content of the display device 14 is not limited to the mode illustrated in Fig. 8. Although not shown, in some embodiments, the vibration monitoring device 1 further includes a MEMS sensor (MEMS: Micro Electro Mechanical Systems) for detecting the vibration of the engine connected to the supercharger 100. The display device 14 displays the amplitude of the vibration of the engine as the vibration information of the engine acquired from the output of the MEMS sensor.

### (Operations and effects)

The operations and effects of the vibration monitoring device 1 according to the first embodiment will be described. According to the present inventors, when the rotation signal A passing through the first pass range R1 set based on the natural frequency Fa of the rotating shaft 102 is extracted from the rotation signal A of the rotating shaft 102, it has been found that the extracted rotation signal A corresponds to the self-excited vibration signal C from which the information on the self-excited vibration of the rotating shaft 102 can be acquired.

Fig. 9 is a Campbell diagram of the rotating shaft 102 according to the first embodiment, in which the vertical axis represents the frequency, the horizontal axis represents the rotation speed, and the diagonal axis represents the rotation order. The size of the circle represents the magnitude of the vibration amplitude. Fig. 9 shows a first diagonal axis 200 that represents a primary rotation order and a second diagonal axis 202 that represents a rotation order which is half of the primary rotation order. When the first diagonal axis 200 is viewed, the amplitude of the forced vibration of the rotating shaft 102 increases (a circle 201 increases) when the rotating shaft 102 rotates in the vicinity of a rotation speed An1 corresponding to the natural frequency Fa (for example, when the natural frequency Fa is 25 Hz, the rotation speed An1 is 1500 rpm). When the rotation speed An is further increased, the vibration of the forced vibration of the rotating shaft 102 is reduced. Meanwhile, when the second diagonal axis 202 is viewed, the amplitude of the vibration of the rotating shaft 102 increases (a circle 203 increases) when the rotating shaft 102 rotates at a speed of approximately twice the rotation speed An1. This vibration is oil whip (self-excited vibration) that is generated mainly by resonance between the rotating shaft 102 and the oil applied to the rotating shaft 102.

According to the first embodiment, the self-excited-vibration bandpass filter 6 extracts the rotation signal A passing through the first pass range R1 set based on the natural frequency Fa of the rotating shaft 102 as the self-excited vibration signal C. For this reason, the self-excited vibration of the rotating shaft 102 can be evaluated from the rotation signal A of the rotating shaft 102.

According to the first embodiment, since the first pass range R1 is 0.9 times the natural frequency Fa of the rotating shaft 102 or more and 1.1 times the natural frequency or less, it is possible to suppress acquisition of noise that does not include the information on the self-excited vibration of the rotating shaft 102 and to improve the accuracy of acquisition of the information on the self-excited vibration of the rotating shaft 102.

As described above, the waveform of the vibration signal E is similar to that of the net actual vibration signal generated by the vibration of the rotating shaft 102. Therefore, the cutoff frequency P is set according to the rotation speed An of the rotating shaft 102, so that the total vibration of the rotating shaft 102 can be highly accurately evaluated. According to the first embodiment, the low-pass filter 10 receives input of the rotation signal A of the rotating shaft 102 and the filter command value B2 to extract the vibration signal E. For this reason, the total vibration of the rotating shaft 102 can be evaluated from the rotation signal A of the rotating shaft 102.

As described above, the first forced vibration signal D1 is a signal extracted from the rotation signal A of the rotating shaft 102 by setting the center frequency Fb of the passband of the bandpass filter 12 to be the same as or substantially the same as the rotation speed An of the rotating shaft 102. The first forced vibration signal D1 is a signal from which vibration (vibration having a frequency of vibration of 1 time or approximately 1 time the rotation speed An) synchronized with the rotation of the rotating shaft 102 can be evaluated. According to the first embodiment, the bandpass filter 12 receives input of the rotation signal A of the rotating shaft 102 and the filter command value B2 to extract the first forced vibration signal D1. For this reason, the forced vibration of the rotating shaft 102 can be evaluated from the rotation signal A of the rotating shaft 102. In particular, it is possible to evaluate and determine the imbalance (for example, imbalance due to scale deposition) of the rotating shaft 102 of the supercharger 100, the bending of the rotating shaft 102, the contact between the rotating shaft 102 and the casing, or the like. It is possible to propose optimal maintenance of the supercharger 100, prevent a failure in advance, and the like.

According to the first embodiment, the display device 14 displays the amplitude Ca of the self-excited vibration signal C, the amplitude Ea of the vibration signal E, and the amplitude D1a of the first forced vibration signal D1 at the same time. For this reason, the self-excited vibration and the forced vibration of the rotating shaft 102 can be evaluated without being confused with each other. In addition, the forced vibration synchronized with the rotation of the rotating shaft 102 out of the forced vibrations of the rotating shaft 102 can be evaluated.

### <Second embodiment>

The vibration monitoring device 1 according to a second embodiment of the present disclosure will be described. In the second embodiment, the vibration monitoring device 1 further includes a nonlinear forced vibration bandpass filter 16, and the filter command value output device 8 is configured to output a division filter command value B3. In the second embodiment, the same components as those in the first embodiment are denoted by the same reference signs, and the detailed descriptions thereof will not be repeated.

### (Configuration)

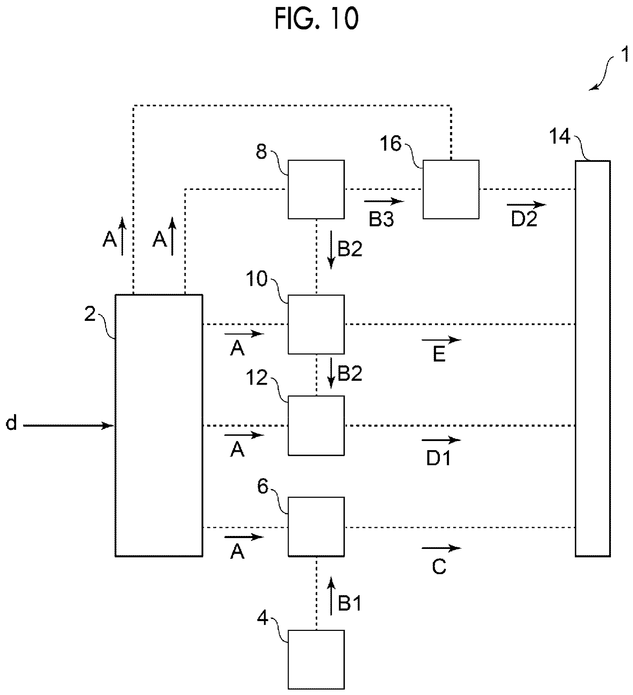

Fig. 10 is a diagram schematically showing a configuration of the vibration monitoring device 1 according to the second embodiment. As illustrated in Fig. 10, the vibration monitoring device 1 further includes the nonlinear forced vibration bandpass filter 16. The filter command value output device 8 is configured to output the division filter command value B3. The nonlinear forced vibration bandpass filter 16 is electrically connected to each of the rotation sensor 2 and the filter command value output device 8, and can acquire the output value (rotation signal A) of the rotation sensor 2 and the output value (division filter command value B3) of the filter command value output device 8.

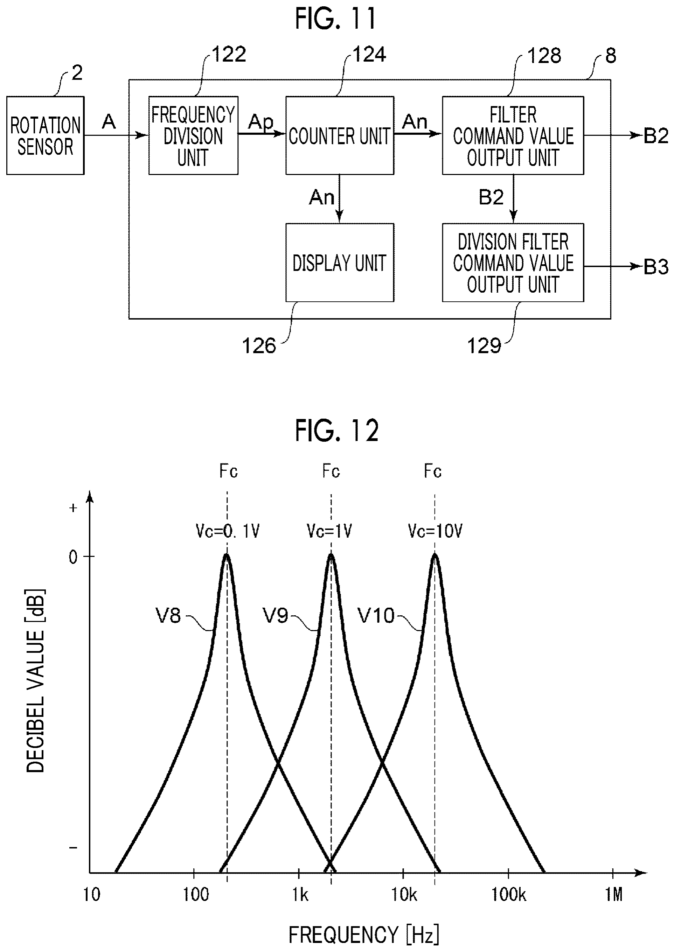

The division filter command value B3 will be described. Fig. 11 is a schematic functional block diagram of the filter command value output device 8 according to the second embodiment. In the second embodiment, as illustrated in Fig. 11, the filter command value output device 8 further includes a division filter command value output unit 129. The division filter command value output unit 129 divides the filter command value B2 output from the filter command value output unit 128 by n (where n = 1, 2, ... are natural numbers) and outputs the division filter command value B3. In some embodiments, n is 2 or 3. By setting n to 2 or 3, it is possible to evaluate the subharmonic vibrations of order 1/2 and order 1/3. Specifically, it is possible to evaluate vibration caused by loosening of the bolts fastening the rotating shaft 102 or the bearing, wear due to uneven contact, or the like.

The nonlinear forced vibration bandpass filter 16 receives input of the rotation signal A and the division filter command value B3 to output (extract) the forced vibration signal (hereinafter, referred to as the "second forced vibration signal D2"). The second forced vibration signal D2, like the first forced vibration signal D1, is a signal from which the information on the forced vibration of the rotating shaft 102 can be acquired.

The nonlinear forced vibration bandpass filter 16 is configured such that a nonlinear center frequency Fc is set according to the division filter command value B3. The nonlinear forced vibration bandpass filter 16 passes, out of the rotation signal A output by the rotation sensor 2, a signal in a passband included in a third pass range R3 including the nonlinear center frequency Fc, and cuts off a signal in a non-passband not included in the third pass range R3. The nonlinear forced vibration bandpass filter 16 extracts the rotation signal A included in the third pass range R3 from the rotation signal A as the second forced vibration signal D2.

Fig. 12 is a diagram showing amplitude-frequency characteristics of the nonlinear forced vibration bandpass filter 16. In Fig. 12, the horizontal axis represents the frequency expressed on a logarithmic scale, and the vertical axis represents the decibel value. In Fig. 12, the characteristic of the nonlinear forced vibration bandpass filter 16 when the voltage value (division filter command value B3) is 0.1 V is indicated by V8, the characteristic of the nonlinear forced vibration bandpass filter 16 when the voltage value is 1 V is indicated by V9, and the characteristic of the nonlinear forced vibration bandpass filter 16 when the voltage value is 10 V is indicated by V10.

In Fig. 12, the decibel value corresponds to the signal intensity, and when the decibel value is less than 0, the second forced vibration signal D2 extracted by the nonlinear forced vibration bandpass filter 16 is attenuated. As shown in Fig. 12, at each voltage value (V8 to V10), the decibel value decreases as the distance between the frequency and the nonlinear center frequency Fc of the passband of the nonlinear forced vibration bandpass filter 16 is increased, and the attenuation rate of the second forced vibration signal D2 increases. The nonlinear center frequency Fc is set according to the division filter command value B3 (value corresponding to the rotation speed An) output by the filter command value output device 8. Specifically, the nonlinear center frequency Fc is set to coincide with or substantially coincide with the rotation speed An of the rotating shaft 102 counted by the counter unit 124 (refer to Fig. 11) of the filter command value output device 8. For example, the nonlinear forced vibration bandpass filter 16 may attenuate the second forced vibration signal D2 to satisfy a relationship 0.8C/n ≤ Fc ≤ 1.2C/n according to the division filter command value B3. In addition, when the rotation speed An of the rotating shaft 102 and the division filter command value B3 are proportional to each other, the nonlinear center frequency Fc may be set such that the division filter command value B3 and the nonlinear center frequency Fc are proportional to each other. In addition, the upper limit and the lower limit of the passband of the nonlinear forced vibration bandpass filter 16 are set on both sides of the nonlinear center frequency Fc according to the division filter command value B3.

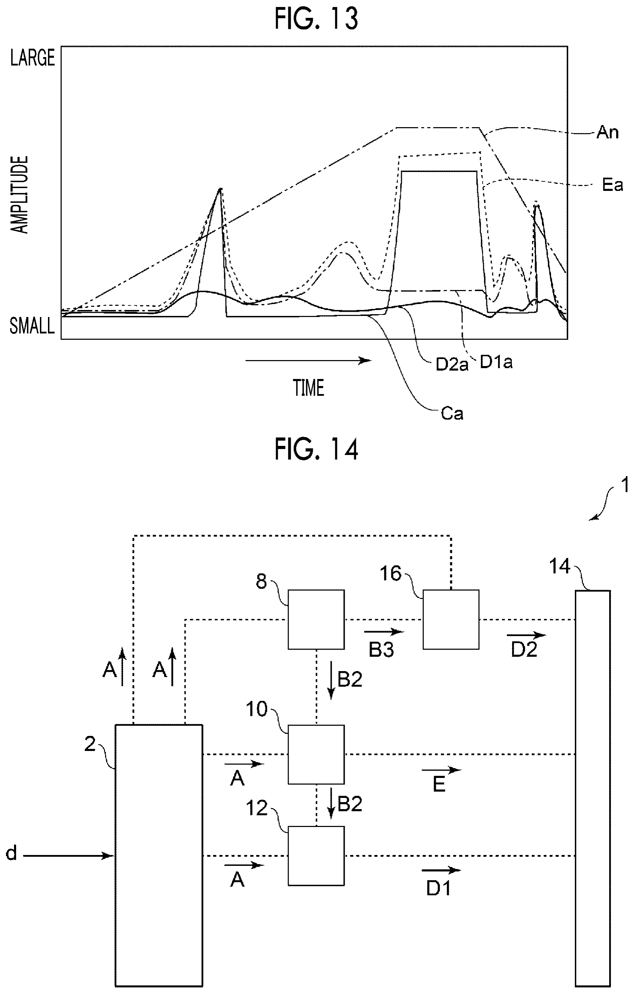

Fig. 13 is a diagram showing an example of display content displayed on the display device 14. In the example shown in Fig. 13, the display device 14 displays (solid line) amplitude D2a of the second forced vibration signal D2 as the information on the forced vibration of the rotating shaft 102 acquired from the second forced vibration signal D2 extracted by the nonlinear forced vibration bandpass filter 16, in addition to the display content illustrated in Fig. 8.

### (Operations and effects)

The operations and effects of the vibration monitoring device 1 according to the second embodiment will be described. According to the present inventors, when the nonlinear center frequency Fc is set according to the division filter command value B3 and the rotation signal A passing through the third pass range R3 including the nonlinear center frequency Fc is extracted from the rotation signal A of the rotating shaft 102, it has been found that the information on the nonlinear forced vibration of the rotating shaft 102 can be acquired from the extracted rotation signal A. Specifically, information on subharmonic resonance caused by backlash due to an assembly defect of a bearing portion that supports the rotating shaft 102, looseness of a coupling portion of the rotating shaft 102, or the like can be acquired.

According to the second embodiment, the nonlinear forced vibration bandpass filter 16 extracts the rotation signal A that passes through the third pass range R3 including the nonlinear center frequency Fc set according to the division filter command value B3, as the second forced vibration signal D2. For this reason, the nonlinear forced vibration of the rotating shaft 102 can also be evaluated from the rotation signal A of the rotating shaft 102.

According to the second embodiment, the display device 14 displays the amplitude Ca of the self-excited vibration signal C, the amplitude Ea of the vibration signal E, the amplitude D1a of the first forced vibration signal D1, and the amplitude D2a of the second forced vibration signal D2 at the same time. For this reason, the overall forced vibration (overall amplitude) of the rotating shaft 102, the forced vibration of the rotating shaft 102 that is synchronized with the rotation of the rotating shaft 102, and the nonlinear forced vibration of the rotating shaft 102 can be evaluated without being confused with each other.

<Third embodiment>

The vibration monitoring device 1 according to a third embodiment of the present disclosure will be described. In the third embodiment, a configuration is adopted in which the output device 4 and the self-excited-vibration bandpass filter 6 are removed from the second embodiment. That is, the configuration is adopted such that the self-excited vibration of the rotating shaft 102 cannot be evaluated, but the nonlinear forced vibration of the rotating shaft 102 can be evaluated.

### (Configuration)

Fig. 14 is a diagram schematically showing a configuration of the vibration monitoring device 1 according to the third embodiment. As illustrated in Fig. 14, the vibration monitoring device 1 includes the rotation sensor 2, the filter command value output device 8, and the nonlinear forced vibration bandpass filter 16. In the third embodiment, the vibration monitoring device 1 further includes the low-pass filter 10, the bandpass filter 12, and the display device 14. Each of the rotation sensor 2, the filter command value output device 8, the nonlinear forced vibration bandpass filter 16, the low-pass filter 10, the bandpass filter 12, and the display device 14 according to the third embodiment has the same configuration as that described in the second embodiment, and the same reference signs as those in the second embodiment are assigned thereto, and detailed description thereof will be omitted.

### (Operations and effects)

According to the third embodiment, the nonlinear forced vibration bandpass filter 16 extracts the rotation signal A that passes through the third pass range R3 including the nonlinear center frequency Fc set according to the division filter command value B3, as the second forced vibration signal D2. For this reason, the nonlinear forced vibration of the rotating shaft 102 can be evaluated from the rotation signal A of the rotating shaft 102. In addition, according to the third embodiment, since the vibration monitoring device 1 further includes the low-pass filter 10, the bandpass filter 12, and the display device 14, it is possible to evaluate the overall forced vibration (overall amplitude) of the rotating shaft 102, the forced vibration of the rotating shaft 102 that is synchronized with the rotation of the rotating shaft 102, and the nonlinear forced vibration of the rotating shaft 102 without being confused with each other.

### <Vibration monitoring method>

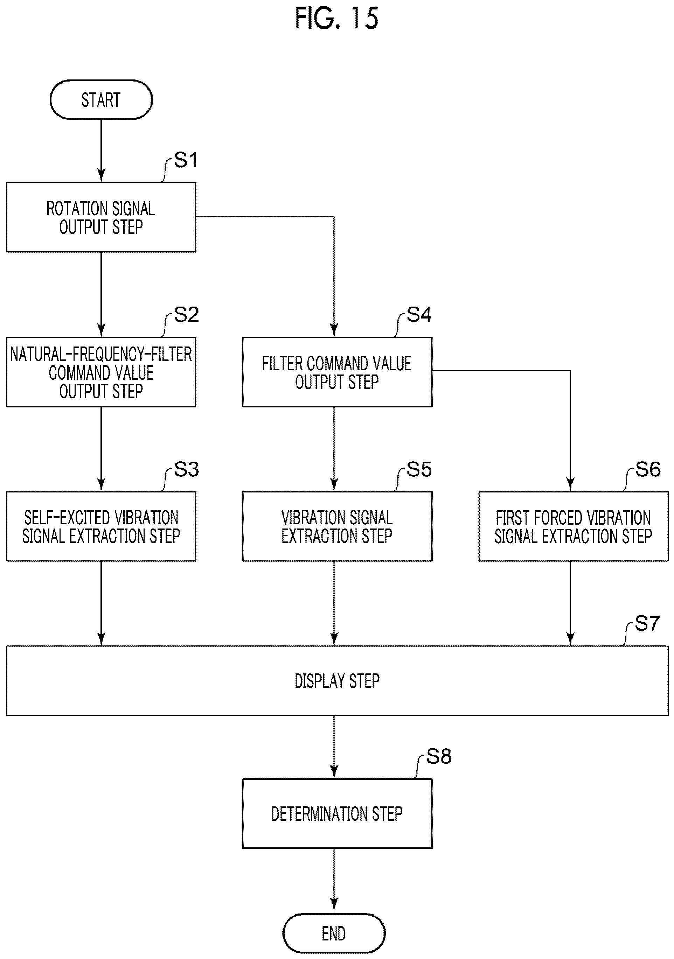

Fig. 15 is a flowchart showing a vibration monitoring method according to an embodiment. As illustrated in Fig. 15, the vibration monitoring method includes rotation signal output step S1, natural-frequency-filter command value output step S2, and self-excited vibration signal extraction step S3.

In rotation signal output step S1, the rotation signal A synchronized with the rotation of the rotating shaft 102 is output. In natural-frequency-filter command value output step S2, the natural-frequency-filter command value B1 calculated from a natural frequency Fa that the rotating shaft 102 has is output. In self-excited vibration signal extraction step S3, input of the rotation signal A and the natural-frequency-filter command value B1 is received to extract a signal in a passband included in the first pass range R1 set according to the natural-frequency-filter command value B1 from the rotation signal A as the self-excited vibration signal C from which the information on the self-excited vibration of the rotating shaft 102 can be acquired. According to such a method, the self-excited vibration of the rotating shaft 102 can be evaluated from the rotation signal A of the rotating shaft 102.

In the mode illustrated in Fig. 15, the vibration monitoring method further includes filter command value output step S4, vibration signal extraction step S5, first forced vibration signal extraction step S6, and display step S7.

In filter command value output step S4, the filter command value B2 corresponding to the rotation speed An of the rotating shaft 102 calculated from the rotation signal A is output. In vibration signal extraction step S5, input of the rotation signal A and the filter command value B2 is received to extract the signal in the passband, which has a frequency smaller than the cutoff frequency P set according to the filter command value B2, from the rotation signal A as the vibration signal E. In first forced vibration signal extraction step S6, input of the rotation signal A and the filter command value B2 is received to extract the signal in the passband including the center frequency Fb set according to the filter command value B2 from the rotation signal A as the first forced vibration signal D1. In display step S7, the information on the total vibration of the rotating shaft 102 acquired from the vibration signal E, the information on the forced vibration of the rotating shaft 102 acquired from the first forced vibration signal D1, and the information on the self-excited vibration of the rotating shaft 102 acquired from the self-excited vibration signal C are simultaneously displayed. According to such a method, the self-excited vibration and the forced vibration of the rotating shaft 102 can be evaluated without being confused with each other. In addition, the forced vibration synchronized with the rotation of the rotating shaft 102 out of the forced vibrations of the rotating shaft 102 can be evaluated.

In the mode illustrated in Fig. 15, the vibration monitoring method further includes determination step S8. In determination step S8, after the display step S7 is executed, a first division value obtained by dividing the "amplitude D1a of the first forced vibration signal D1" by the "amplitude Ea of the vibration signal E" and a second division value obtained by dividing the "amplitude Ca of the self-excited vibration signal C" by the "amplitude Ea of the vibration signal E" are calculated. In a case where the first division value is greater than a predetermined value (for example, 0.8) or the second division value is equal to or less than a predetermined value (for example, 0.5), it is determined that the vibration of the rotating shaft 102 is dominated by the forced vibration. In some embodiments, in a case where the first division value is greater than a predetermined value (for example, 0.8) and the second division value is greater than a predetermined value (for example, 0.5), it is determined that the vibration of the rotating shaft 102 is dominated by the forced vibration. In some embodiments, in a case where the first division value is equal to or less than a predetermined value (for example, 0.8) and the second division value is greater than a predetermined value (for example, 0.5), it is determined that the vibration of the rotating shaft 102 is dominated by the self-excited vibration.

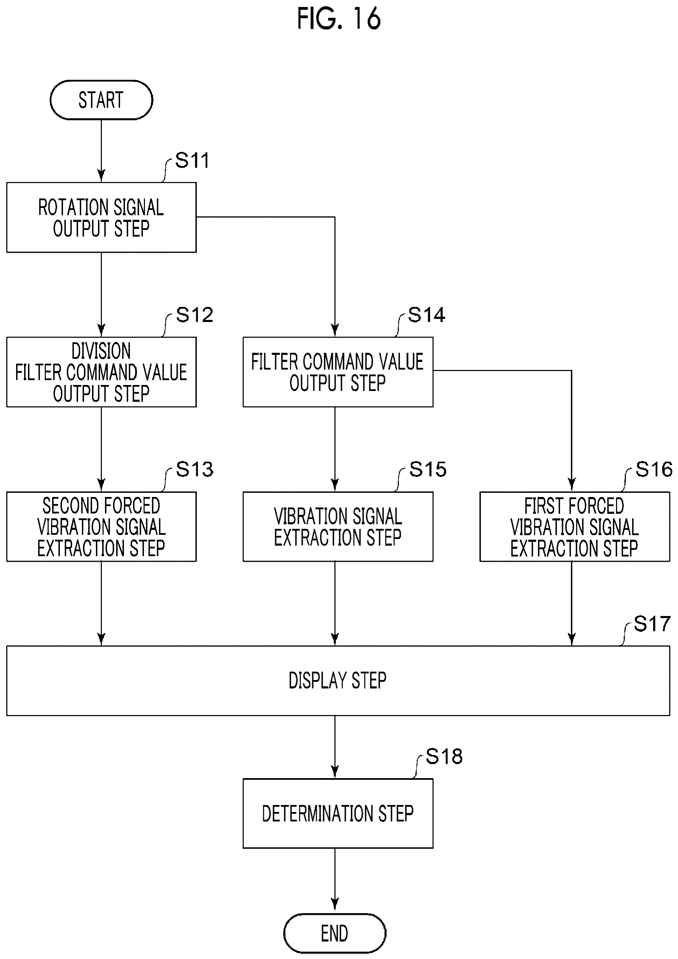

Fig. 16 is a flowchart showing a vibration monitoring method according to another embodiment. As illustrated in Fig. 16, the vibration monitoring method includes rotation signal output step S11, division filter command value output step S12, and second forced vibration signal extraction step S13.

In rotation signal output step S11, the rotation signal A synchronized with the rotation of the rotating shaft 102 is output. In division filter command value output step S12, the division filter command value B3 obtained by dividing the filter command value B2 corresponding to the rotation speed An of the rotating shaft 102 calculated from the rotation signal A by n (where n = 1, 2, ... are natural numbers) is output. In second forced vibration signal extraction step S13, input of the rotation signal A and the division filter command value B3 is received to extract the signal in the passband including the nonlinear center frequency Fc set according to the division filter command value B3 from the rotation signal A as the second forced vibration signal D2. According to such a method, the nonlinear forced vibration of the rotating shaft 102 can be evaluated from the rotation signal A of the rotating shaft 102.

In the mode illustrated in Fig. 16, the vibration monitoring method further includes filter command value output step S14, vibration signal extraction step S15, first forced vibration signal extraction step S16, and display step S17.

In filter command value output step S14, the filter command value B2 corresponding to the rotation speed An of the rotating shaft 102 calculated from the rotation signal A is output. In vibration signal extraction step S15, input of the rotation signal A and the filter command value B2 is received to extract the signal in the passband, which has a frequency smaller than the cutoff frequency P set according to the filter command value B2, from the rotation signal A as the vibration signal E. In first forced vibration signal extraction step S16, input of the rotation signal A and the filter command value B2 is received to extract the signal in the passband including the center frequency Fb set according to the filter command value B2 from the rotation signal A as the first forced vibration signal D1. In display step S17, the information on the total vibration of the rotating shaft 102 acquired from the vibration signal E, the information on the forced vibration of the rotating shaft 102 acquired from the first forced vibration signal D1, and the information on the forced vibration of the rotating shaft 102 acquired from the second forced vibration signal D2 are simultaneously displayed. According to such a method, the overall vibration (overall amplitude) of the rotating shaft 102, the forced vibration of the rotating shaft 102 that is synchronized with the rotation of the rotating shaft 102, and the nonlinear forced vibration of the rotating shaft 102 can be evaluated without being confused with each other.

In the mode illustrated in Fig. 16, the vibration monitoring method further includes determination step S18. In determination step S18, after the display step S17 is executed, a third division value obtained by dividing the "amplitude D1a of the first forced vibration signal D1" by the "amplitude Ea of the vibration signal E" and a fourth division value obtained by dividing the "amplitude D2a of the second forced vibration signal D2" by the "amplitude Ea of the vibration signal E" are calculated. In a case where the third division value is equal to or less than a predetermined value (for example, 0.8) and the fourth division value is greater than a predetermined value (for example, 0.4), it is determined that the vibration of the rotating shaft 102 is dominated by the nonlinear forced vibration. In some embodiments, in a case where the third division value is greater than a predetermined value (for example, 0.8) or the fourth division value is equal to or less than a predetermined value (for example, 0.4), it is determined that the vibration of the rotating shaft 102 is dominated by vibration other than the nonlinear forced vibration.

The contents described in each embodiment are understood, for example, as follows.
[1] A vibration monitoring device (1) according to the present disclosure includes a rotation sensor (2) that outputs a rotation signal (A) synchronized with a rotation of a rotating shaft (102), an output device (4) that outputs a natural-frequency-filter command value (B1) calculated from a natural frequency (Fa) that the rotating shaft has, and a self-excited-vibration bandpass filter (6) that receives input of the rotation signal and the natural-frequency-filter command value to extract a signal in a passband included in a pass range (R1) set according to the natural-frequency-filter command value from the rotation signal as a self-excited vibration signal (C) from which information on self-excited vibration of the rotating shaft is acquirable.

According to the present inventors, when the rotation signal passing through the passband set based on the natural frequency of the rotating shaft is extracted from the rotation signal of the rotating shaft, it has been found that the extracted rotation signal corresponds to the self-excited vibration signal from which the information on the self-excited vibration of the rotating shaft can be acquired. According to the configuration described in [1], the self-excited-vibration bandpass filter extracts the rotation signal passing through the passband set based on the natural frequency of the rotating shaft as the self-excited vibration signal. For this reason, the self-excited vibration of the rotating shaft can be evaluated from the rotation signal of the rotating shaft.

[2] In some embodiments, in the configuration described in [1], there are further provided a filter command value output device (8) that outputs a division filter command value (B3) obtained by dividing a filter command value (B2) corresponding to a rotation speed (An) of the rotating shaft calculated from the rotation signal by n (where n = 1, 2, ... are natural numbers) and a nonlinear forced vibration bandpass filter (16) that receives input of the rotation signal and the division filter command value to extract a signal in a passband including a nonlinear center frequency (Fc) set according to the division filter command value from the rotation signal as a forced vibration signal (D3) from which information on forced vibration of the rotating shaft is acquirable.

According to the present inventors, when the nonlinear center frequency is set according to the division filter command value obtained by dividing the filter command value corresponding to the rotation speed of the rotating shaft by n and the rotation signal passing through the passband including the nonlinear center frequency is extracted from the rotation signal of the rotating shaft, it has been found that the extracted rotation signal corresponds to the forced vibration signal from which the information on the nonlinear forced vibration of the rotating shaft can be acquired. According to the configuration described in [2], the nonlinear forced vibration bandpass filter extracts the rotation signal that passes through the passband including the nonlinear center frequency set according to the division filter command value, as the forced vibration signal. For this reason, the nonlinear forced vibration can also be evaluated from the rotation signal of the rotating shaft.

[3] In some embodiments, in the configuration described in [1], there are further provided a filter command value output device (8) that outputs a filter command value (B2) corresponding to a rotation speed (An) of the rotating shaft calculated from the rotation signal, a low-pass filter (10) that receives input of the rotation signal and the filter command value to extract a signal in a passband, which has a frequency smaller than a cutoff frequency (P) set according to the filter command value, from the rotation signal as a vibration signal (E) from which information on vibration of the rotating shaft is acquirable, a bandpass filter (12) that receives the input of the rotation signal and the filter command value to extract a signal in a passband including a center frequency (Fb) set according to the filter command value from the rotation signal as a forced vibration signal (D2) from which information on forced vibration of the rotating shaft is acquirable, and a display device (14) that simultaneously displays the information on the vibration of the rotating shaft acquired from the vibration signal extracted by the low-pass filter, the information on the forced vibration of the rotating shaft acquired from the forced vibration signal extracted by the bandpass filter, and the information on the self-excited vibration of the rotating shaft acquired from the self-excited vibration signal extracted by the self-excited-vibration bandpass filter.

According to the configuration described in [3], the self-excited vibration and the forced vibration of the rotating shaft can be evaluated without being confused with each other. In addition, the forced vibration of the rotating shaft extracted by the bandpass filter (that is, the forced vibration synchronized with the rotation of the rotating shaft) can be evaluated out of the forced vibrations of the rotating shaft.

[4] In some embodiments, in the configuration described in [2], the filter command value output device is configured to further output the filter command value, and there are further provided a low-pass filter (10) that receives input of the rotation signal and the filter command value to extract a signal in a passband, which has a frequency smaller than a cutoff frequency (P) set according to the filter command value, from the rotation signal as a vibration signal (E) from which information on vibration of the rotating shaft is acquirable, a bandpass filter (12) that receives the input of the rotation signal and the filter command value to extract a signal in a passband including a center frequency (Fb) set according to the filter command value from the rotation signal as the forced vibration signal (D2), and a display device (14) that simultaneously displays the information on the vibration of the rotating shaft acquired from the vibration signal extracted by the low-pass filter, the information on the forced vibration of the rotating shaft acquired from the forced vibration signal extracted by the bandpass filter, and the information on the forced vibration of the rotating shaft acquired from the forced vibration signal extracted by the nonlinear forced vibration bandpass filter.

According to the configuration described in [4], the forced vibration of the rotating shaft extracted by the low-pass filter, the forced vibration of the rotating shaft extracted by the bandpass filter, and the forced vibration of the rotating shaft extracted by the nonlinear forced vibration bandpass filter can be evaluated without being confused with each other.

[5] In some embodiments, in the configuration described in any one of [1] to [4], the pass range is 0.9 times the natural frequency or more and 1.1 times the natural frequency or less.

According to the configuration described in [5], it is possible to suppress acquisition of noise that does not include the information on the self-excited vibration of the rotating shaft and to improve the accuracy of acquisition of the information on the self-excited vibration of the rotating shaft.

[6] A vibration monitoring device (1) according to the present disclosure includes a rotation sensor (2) that outputs a rotation signal (A) synchronized with a rotation of a rotating shaft (102), a filter command value output device (8) that outputs a division filter command value (B3) obtained by dividing a filter command value (B2) corresponding to a rotation speed (An) of the rotating shaft calculated from the rotation signal by n (where n = 1, 2, ... are natural numbers), and a nonlinear forced vibration bandpass filter (16) that receives input of the rotation signal and the division filter command value to extract a signal in a passband including a nonlinear center frequency (Fc) set according to the division filter command value from the rotation signal as a forced vibration signal (D3) from which information on forced vibration of the rotating shaft is acquirable.

According to the present inventors, when the nonlinear center frequency is set according to the division filter command value obtained by dividing the filter command value corresponding to the rotation speed of the rotating shaft by n and the rotation signal passing through the passband including the nonlinear center frequency is extracted from the rotation signal of the rotating shaft, it has been found that the extracted rotation signal corresponds to the forced vibration signal from which the information on the nonlinear forced vibration of the rotating shaft can be acquired. According to the configuration described in [6], the nonlinear forced vibration bandpass filter extracts the rotation signal that passes through the passband including the nonlinear center frequency set according to the division filter command value, as the forced vibration signal. For this reason, the nonlinear forced vibration can be evaluated from the rotation signal of the rotating shaft.

[7] A supercharger (100) according to the present disclosure includes the vibration monitoring device (1) described in any one of [1] to [6], a compressor (104) provided at one end portion of the rotating shaft, and a turbine (106) provided at the other end portion of the rotating shaft.

According to the configuration described in [7], it is possible to provide the supercharger capable of evaluating the self-excited vibration or the nonlinear forced vibration of the rotating shaft of the supercharger from the rotation signal of the rotating shaft of the supercharger.

[8] A vibration monitoring method according to the present disclosure includes a step (S1) of outputting a rotation signal synchronized with a rotation of a rotating shaft, a step (S2) of outputting a natural-frequency-filter command value calculated from a natural frequency that the rotating shaft has, and a step (S3) of receiving input of the rotation signal and the natural-frequency-filter command value to extract a signal in a passband included in a pass range set according to the natural-frequency-filter command value from the rotation signal as a self-excited vibration signal from which information on self-excited vibration of the rotating shaft is acquirable.

According to the method described in [8], the rotation signal of the rotating shaft that passes through the passband set based on the natural frequency of the rotating shaft is extracted as the self-excited vibration signal. Therefore, the self-excited vibration of the rotating shaft can be evaluated from the rotation signal of the rotating shaft.

[9] A vibration monitoring method according to the present disclosure includes a step (S11) of outputting a rotation signal synchronized with a rotation of a rotating shaft, a step (S12) of outputting a division filter command value obtained by dividing a filter command value corresponding to a rotation speed of the rotating shaft calculated from the rotation signal by n (where n = 1, 2, ... are natural numbers), and a step (S13) of receiving input of the rotation signal and the division filter command value to extract a signal in a passband including a nonlinear center frequency set according to the division filter command value from the rotation signal as a forced vibration signal from which information on forced vibration of the rotating shaft is acquirable.

According to the method described in [9], the rotation signal of the rotating shaft that passes through the passband including the nonlinear center frequency set according to the division filter command value is extracted as the forced vibration signal. Therefore, the nonlinear forced vibration can be evaluated from the rotation signal of the rotating shaft.

### Reference Signs List

1: vibration monitoring device
2: rotation sensor
4: output device
6: self-excited-vibration bandpass filter
8: filter command value output device
10: low-pass filter
12: bandpass filter
14: display device
16: nonlinear forced vibration bandpass filter
100: supercharger
102: rotating shaft
104: compressor
106: turbine
122: frequency division unit
124: counter unit
126: display unit
128: filter command value output unit
129: division filter command value output unit
200: first diagonal axis
202: second diagonal axis
A: rotation signal
An: rotation speed
Ap: rotation pulse signal
B1: natural-frequency-filter command value
B2: filter command value
B3: division filter command value
C: self-excited vibration signal
D1: first forced vibration signal
D2: second forced vibration signal
E: vibration signal
Fa: natural frequency
Fb: center frequency
Fc: nonlinear center frequency
P: cutoff frequency
R1: first pass range
R2: second pass range
R3: third pass range
S1: rotation signal output step
S2: natural-frequency-filter command value output step
S3: self-excited vibration signal extraction step
S11: rotation signal output step
S12: division filter command value output step
S13: second forced vibration signal extraction step
Further embodiments are described as E1 - E9 below:
E1. A vibration monitoring device comprising:
   a rotation sensor that outputs a rotation signal synchronized with a rotation of a rotating shaft;
   an output device that outputs a natural-frequency-filter command value calculated from a natural frequency that the rotating shaft has; and
   a self-excited-vibration bandpass filter that receives input of the rotation signal and the natural-frequency-filter command value to extract a signal in a passband included in a pass range set according to the natural-frequency-filter command value from the rotation signal as a self-excited vibration signal from which information on self-excited vibration of the rotating shaft is acquirable.
E2. The vibration monitoring device according to embodiment 1, further comprising:
   a filter command value output device that outputs a division filter command value obtained by dividing a filter command value corresponding to a rotation speed of the rotating shaft calculated from the rotation signal by n (where n = 1, 2, ... are natural numbers); and
   a nonlinear forced vibration bandpass filter that receives input of the rotation signal and the division filter command value to extract a signal in a passband including a nonlinear center frequency set according to the division filter command value from the rotation signal as a forced vibration signal from which information on forced vibration of the rotating shaft is acquirable.
E3. The vibration monitoring device according to embodiment 1, further comprising:
   a filter command value output device that outputs a filter command value corresponding to a rotation speed of the rotating shaft calculated from the rotation signal;
   a low-pass filter that receives input of the rotation signal and the filter command value to extract a signal in a passband, which has a frequency smaller than a cutoff frequency set according to the filter command value, from the rotation signal as a vibration signal from which information on vibration of the rotating shaft is acquirable;
   a bandpass filter that receives the input of the rotation signal and the filter command value to extract a signal in a passband including a center frequency set according to the filter command value from the rotation signal as a forced vibration signal from which information on forced vibration of the rotating shaft is acquirable; and
   a display device that simultaneously displays the information on the vibration of the rotating shaft acquired from the vibration signal extracted by the low-pass filter, the information on the forced vibration of the rotating shaft acquired from the forced vibration signal extracted by the bandpass filter, and the information on the self-excited vibration of the rotating shaft acquired from the self-excited vibration signal extracted by the self-excited-vibration bandpass filter.
E4. The vibration monitoring device according to embodiment 2,
   wherein the filter command value output device is configured to further output the filter command value, and
   the vibration monitoring device further comprises
   a low-pass filter that receives input of the rotation signal and the filter command value to extract a signal in a passband, which has a frequency smaller than a cutoff frequency set according to the filter command value, from the rotation signal as a vibration signal from which information on vibration of the rotating shaft is acquirable,
   a bandpass filter that receives the input of the rotation signal and the filter command value to extract a signal in a passband including a center frequency set according to the filter command value from the rotation signal as the forced vibration signal, and
   a display device that simultaneously displays the information on the vibration of the rotating shaft acquired from the vibration signal extracted by the low-pass filter, the information on the forced vibration of the rotating shaft acquired from the forced vibration signal extracted by the bandpass filter, and the information on the forced vibration of the rotating shaft acquired from the forced vibration signal extracted by the nonlinear forced vibration bandpass filter.
E5. The vibration monitoring device according to any one of embodiments 1 to 4,
   wherein the pass range is 0.9 times the natural frequency or more and 1.1 times the natural frequency or less.
E6. A vibration monitoring device comprising:
   a rotation sensor that outputs a rotation signal synchronized with a rotation of a rotating shaft;
   a filter command value output device that outputs a division filter command value obtained by dividing a filter command value corresponding to a rotation speed of the rotating shaft calculated from the rotation signal by n (where n = 1, 2, ... are natural numbers); and
   a nonlinear forced vibration bandpass filter that receives input of the rotation signal and the division filter command value to extract a signal in a passband including a nonlinear center frequency set according to the division filter command value from the rotation signal as a forced vibration signal from which information on forced vibration of the rotating shaft is acquirable.
E7. A supercharger comprising:
   the vibration monitoring device according to any one of embodiments 1 to 4 and 6;
   a compressor provided at one end portion of the rotating shaft; and
   a turbine provided at the other end portion of the rotating shaft.
E8. A vibration monitoring method comprising:
   a step of outputting a rotation signal synchronized with a rotation of a rotating shaft;
   a step of outputting a natural-frequency-filter command value calculated from a natural frequency that the rotating shaft has; and
   a step of receiving input of the rotation signal and the natural-frequency-filter command value to extract a signal in a passband included in a pass range set according to the natural-frequency-filter command value from the rotation signal as a self-excited vibration signal from which information on self-excited vibration of the rotating shaft is acquirable.
E9. A vibration monitoring method comprising:
   a step of outputting a rotation signal synchronized with a rotation of a rotating shaft;
   a step of outputting a division filter command value obtained by dividing a filter command value corresponding to a rotation speed of the rotating shaft calculated from the rotation signal by n (where n = 1, 2, ... are natural numbers); and
   a step of receiving input of the rotation signal and the division filter command value to extract a signal in a passband including a nonlinear center frequency set according to the division filter command value from the rotation signal as a forced vibration signal from which information on forced vibration of the rotating shaft is acquirable.

## Claims

1. A vibration monitoring device comprising:
a rotation sensor that outputs a rotation signal synchronized with a rotation of a rotating shaft;
a filter command value output device that outputs a division filter command value obtained by dividing a filter command value corresponding to a rotation speed of the rotating shaft calculated from the rotation signal by n (where n = 1, 2, ... are natural numbers); and
a nonlinear forced vibration bandpass filter that receives input of the rotation signal and the division filter command value to extract a signal in a passband including a nonlinear center frequency set according to the division filter command value from the rotation signal as a forced vibration signal from which information on forced vibration of the rotating shaft is acquirable.

2. A supercharger comprising:
the vibration monitoring device according to Claim 1;
a compressor provided at one end portion of the rotating shaft; and
a turbine provided at the other end portion of the rotating shaft.

3. A vibration monitoring method comprising:
a step of outputting a rotation signal synchronized with a rotation of a rotating shaft;
a step of outputting a division filter command value obtained by dividing a filter command value corresponding to a rotation speed of the rotating shaft calculated from the rotation signal by n (where n = 1, 2, ... are natural numbers); and
a step of receiving input of the rotation signal and the division filter command value to extract a signal in a passband including a nonlinear center frequency set according to the division filter command value from the rotation signal as a forced vibration signal from which information on forced vibration of the rotating shaft is acquirable.
